# EUROPÄISCHE PATENTSCHRIFT

(11) **EP 2 607 185 B1**
(45) Veröffentlichungstag und Bekanntmachung des Hinweises auf die Patenterteilung: **29.04.2015**
(21) Anmeldenummer: 12191741.3
(22) Anmeldetag: 08.11.2012
(51) Int. Cl.: B60S 1/08

(54) **Verfahren zur Regelung bzw. Steuerung einer Scheibenwischvorrichtung, Computerprogrammprodukt, Steuergerät und Scheibenwischvorrichtung**
Method for regulating or controlling a windscreen wiper device, computer program product, control unit and windshield wiper device
Procédé de régulation ou de commande d'un dispositif essuie-glace, produit de programme informatique, appareil de commande et dispositif essuie-glace

(30) Priorität: 23.12.2011 DE 102011089849
(43) Veröffentlichungstag der Anmeldung: 26.06.2013
(73) Patentinhaber: ROBERT BOSCH GMBH, 70442 Stuttgart (DE)
(72) Erfinder: Braun, Peter, 77830 Buehlertal (DE); Wegner, Norbert, 77815 Buehl (DE); Rapp, Juergen, 77886 Lauf (DE); Kuderer, Alexander, 77770 Durbach (DE); May, Michael, 77654 Offenburg (DE)

(56) Entgegenhaltungen:
- DE-A1- 10 144 985
- DE-A1-102008 001 816
- JP-A- 2011 218 997

## Beschreibung

Die Erfindung betrifft ein Verfahren zum Betreiben eines Wischantriebs mit einem Motor, ein Computerprogrammprodukt mit Programmcode, der auf einem maschinenlesbaren Träger gespeichert ist, und ein Steuergerät für einen Wischantrieb. Insbesondere bezieht sich die Erfindung hierbei auf die Lastabhängigkeit des Motor-Drehmoments während des Wischens. Ausführungsformen der Erfindung betreffen weiterhin eine Scheibenwischvorrichtung und ein Verfahren zur Regelung bzw. Steuerung einer Scheibenwischvorrichtung insbesondere für ein Kraftfahrzeug mit einem elektronisch angesteuerten Wischerantriebsmotor

### Stand der Technik

Es sind zahlreiche Verfahren zur Steuerung von Wischantrieben (WSA) bekannt. Zum Beispiel beschreibt DE 101 44 985 einen Antrieb, der über eine Wischerwelle und ein von der Stellung des Getriebes abhängigem Drehmoment einen Wischer antreibt. Hierbei wird eine Steuerung derart verwendet, dass das von einem Motor abgegebene Drehmoment zu jedem Zeitpunkt unter Berücksichtigung des Übersetzungsverhältnisses bestimmt wird. Bei diesen Verfahren wird der Wischermotor jeweils so angesteuert, dass die Position des Wischblattes auf der Scheibe sich immer auf einer Soll-Trajektorie bewegt. Bei anderen Verfahren wird der Wischermotor in den kritischen Bereichen der Scheibenwischvorrichtung in seinem max. abgebbaren Drehmoment durch Reduzierung der Spannungsversorgung über eine Ansteuereinheit reduziert. Bei Scheibenwischvorrichtungen mit direktem Antrieb der Wischhebel über den Antriebsmotor ohne zwischengeschaltetes Gestänge wird der Antrieb zum Schutz des Getriebes bei Erreichen eines für den dauerhaften Betrieb des Getriebes max. zulässigen Momentes abgeregelt.

Bei Wischantrieben (WSA) werden die Bauteile im Betrieb durch Kräfte belastet. Dabei steigen bei Wischantrieben, wie sie beispielsweise in Kraftfahrzeugen für Scheibenwischer verwendet werden, diese Kräfte insbesondere im Falle von Schneelast, von Windlast oder im Falle des Blockierens des Wischers an. Vor allem im letzteren Fall des Blockierens, insbesondere bei steifen Anlagen, können sehr große Belastungen auftreten.

Typischerweise werden bei Wischanlagen mit Wischerdirektantrieben Antriebe mit reversierenden Elektromotoren verwendet, bei denen der Motor zur Generierung der Hin- und Herbewegung des Wischers die Drehrichtung wechseln. Das Wischerblatt wechselt hierbei die Bewegungsrichtung in einer unteren bzw. oberen Wendelage. Die Verwendung derartiger Reversiermotoren ermöglicht weiterhin eine erweiterte Parkstellung (EPS).

Als Schutzfunktion gegen Beschädigungen oder Zerstörungen kann einem in einem Wischantrieb enthaltener Elektromotor durch Pulsweitenmodulation (PWM) eine begrenzte Spannung und somit ein begrenztes Motor-Drehmoment zur Begrenzung der Belastung zugeführt werden. Eine Begrenzung dient hierbei dem Schutz vor Beschädigung und der Einhaltung von Spezifikationen, um die Lebensdauer der Bauteile zu gewährleisten. Es existieren jedoch Betriebsmodi, in denen eine Begrenzung zu einem Blockieren der Wischanlage führt, was aus Sicht eines Fahrzeugführers zumindest zu einer Einschränkung des Komforts führt.

### Offenbarung der Erfindung

Die Aufgabe der Erfindung besteht darin, die oben genannten Probleme zumindest teilweise zu lösen bzw. verbesserte Drehmomentsteuerung zur Verfügung zu stellen.

Gemäß einer Ausführungsform wird ein Verfahren zum Betreiben eines Wischdirektantriebs mit einem Motor für einen Wischervorrichtung zur Verfügung gestellt. Das Verfahren beinhaltet zur Verfügung stellen eines begrenzenden Belastungsmoments für einen regulären Betrieb, ermitteln von zumindest einer ersten Kenngröße für eine Plausibilität eines Ausnahmefalls, ermitteln von zumindest einer zweiten Kenngröße für eine Zulässigkeit eines Ausnahmefalls, und außer Kraft setzen des begrenzenden Belastungsmoments in Abhängigkeit der ersten Kenngröße und der zweiten Kenngröße.

Gemäß einer weiteren Ausführungsform wird ein Computerprogrammprodukt mit Programmcode, der auf einem maschinenlesbaren Träger gespeichert ist, zur Verfügung gestellt. Das Computerprogrammprodukt ist zur Durchführung eines der hierin beschriebenen Verfahrensausführungsformen der Erfindung ausgestaltet, wenn das Programm auf einem Computer oder einem Steuergerät eines Fahrzeugs ausgeführt wird.

Gemäß einer noch weiteren Ausführungsform wird ein Steuergerät für einen Wischantrieb zur Verfügung gestellt, das zur Anwendung in einem Verfahren gemäß hierin beschriebenen Ausführungsformen programmiert ist.

Gemäß einer noch weiteren Ausführungsform wird eine Scheibenwischvorrichtung zur Verfügung gestellt. Die Scheibenwischvorrichtung beinhaltet ein Steuergerät gemäß einer der hierin beschriebenen Ausführungsformen und/oder ein Computerprogramprodukt gemäß einer der hierin beschriebenen Ausführungsformen; und ein Wischerdirektantrieb mit dem Motor, einem Wischarm und ein Wischblatt.

Bevorzugte Ausführungsformen und besondere Aspekte der Erfindung ergeben sich aus den Unteransprüchen, in den Zeichnungen und der beiliegenden Beschreibung.

### Vorteile der Erfindung

Die hier beschriebenen Ausführungsformen gemäß der vorliegenden Erfindung können ein Blockieren einer Scheibenwischvorrichtung in manchen Fällen vermeiden ohne die Systemlebensdauer in einem relevanten Maß negativ zu beeinflussen.

Ausführungsformen der Erfindung stellen hierzu ein Verfahren zum Betreiben eines Wischdirektantriebs mit einem Motor für einen Wischervorrichtung zur Verfügung. Das Verfahren beinhaltet zur Verfügung stellen eines begrenzenden Belastungsmoments für einen regulären Betrieb, ermitteln von zumindest einer ersten Kenngröße für eine Plausibilität eines Ausnahmefalls, ermitteln von zumindest einer zweiten Kenngröße für eine Zulässigkeit eines Ausnahmefalls, und außer Kraft setzen des begrenzenden Belastungsmoments in Abhängigkeit der ersten Kenngröße und der zweiten Kenngröße. Es kann somit eine Abweichung eines regulären Betriebs erfolgen, die nach Prüfen einer Plausibilität für den Ausnahmefall und der Ermittlung zumindest einer weiteren Größe für die Einsatzmöglichkeit der Ausnahme, z.B. zumindest ein Lastkollektiv, gezielt eingesetzt werden kann. Somit kann ein verbesserter Komfort erzielt werden, ohne dass die Systemlebensdauer in einem relevanten Maß negativ beeinflusst wird. Ausführungsformen der Erfindung können somit eine Boost-Funktion für eine Wischeranlage gezielt zur Verfügung stellen.

Gemäß einer weiteren typischen Ausführungsform kann das außer Kraft setzen weiterhin ein zur Verfügung stellen eines weiteren begrenzenden Belastungsmoments beinhalten, wobei das weitere begrenzende Belastungsmoment höher ist als das begrenzende Belastungsmoment, insbesondere zumindest 50 % höher ist als das begrenzende Belastungsmoment. Hierdurch kann ein Ausnahmefall gezielt generiert werden, wobei als weitere Randbedingung die Beschädigungsgrenze einer oder mehrerer Komponenten einer Wischervorrichtung berücksichtigt werden kann. Der Wert des weiteren begrezenden Belastungsmoments kann zum Erzielen der gewünschten Wirksamtkeit aus der jeweiligen Applikation heraus höher oder tiefer gewählt werden.

Gemäß einer weiteren typischen Ausführungsform kann die erste Kenngröße zumindest eine Kenngröße umfassen, die aus der Gruppe bestehend aus: eine Umgebungstemperatur und ein Blockieren der Wischervorrichtung, gewählt ist. Durch die Wahl der Umgebungstempertatur, des Blockierens oder beiden Kenngrößen zur Überprüfung der Plausibilität kann gewährleistet werden, dass der Ausnahmefall mit ausreichend hoher Wahrscheinlichkeit nur für den notwenigen Fall, wie zum Beispiel einem Schneeaufbau auf einer Windschutzscheibe, eingesetzt wird.

Gemäß einer weiteren typischen Ausführungsform kann die Kenngröße der Umgebungstemperatur eine Obergrenze für die Plausibilität eines Ausnahmefalls von -10°C bis 5°C, wie zum Beispiel 4°C, haben. Für Temperaturen bis zu dieser Obergrenze ist es plausibel, dass ein Schneeaufbau vorliegt. Für Temperaturen oberhalb der Obergrenze für die Umgebungstemperatur scheint eine gegebenenfalls nicht zu behebende Ausnahme vorzuliegen. Ein "Boost", der gegebenenfalls zur Beschädigung der Scheibenwischvorrichtung führen könnte, wird daher oberhalb der Grenze nicht eingesetzt. Andere Obergrenzen bzw. Grenzen können sich aus der Ableitung der Rahmenbedingungen in den weltweit vorliegenden Klimazonen ergeben.

Gemäß einer weiteren typischen Ausführungsform kann die zweite Kenngröße zumindest eine Kenngröße umfassen, die aus der Gruppe bestehend aus: eine erste Anzahl von bereits existierenden Ausnahmefällen in einem begrenzten Zeitraum und eine zweite Anzahl von bereits existierenden Ausnahmefällen im Lebenszyklus zumindest einer Komponente der Wischervorrichtung. Die Anzahl von Ausnahmefällen in einem begrenzten Zeitraum ermöglicht es die Anzahl der Versuche zum Freiräumen eines Schneeaufbaus auf einer Scheibe zu begrenzen. Hierdurch kann eine Beschädigung der Scheibenwischvorrichtung verhindert werden. Die Anzahl der Ausnahmefälle im Lebenszyklus einer Komponente, wie zum Beispiel des Motors oder des Getriebes, ermöglicht die Begrenzung auf ein gesamtes Lastkollektive über die Lebensdauer der Komponente. Hierdurch kann gewährleistet werden, dass eine Boost-Funktion im Lebenszyklus der Komponente nur so häufig zum Einsatz kommt, dass die Systemlebensdauer nicht in einem relevanten Maß negativ zu beeinflussen. Zum Beispiel kann die erste Anzahl eine Obergrenze für die Zulässigkeit eines Ausnahmefalls in einem Zeitraum von wenigen Minuten von 1 bis 15 sein oder von 5 bis 15 sein. Die zweite Anzahl, die sich auf die Lebensdauer von Komponenten bezieht, kann einen eine Obergrenze für die Zulässigkeit eines Ausnahmefalls von 1000 bis 15000 haben. Die erste Anzahl kann eine Obergrenze für die Zulässigkeit eines Ausnahmefalls von 1 oder mehr haben, und/oder die Kenngröße der zweiten Anzahl kann eine Obergrenze für die Zuverlässigkeit eines Ausnahmefalls von 1.000 oder mehr haben. Abhängig von den Rahmenbedingungen in den weltweit vorliegenden Klimazonen kann für Applikationen auch Werte unterhalb von 1.000 Betätigungen für eine ausreichende Verfügbarkeit definiert werden.

Gemäß einer weiteren typischen Ausführungsform kann das außer Kraft setzen auf einen vorbestimmten Ausnahmezeitraum beschränkt werden, insbesondere auf einen Ausnahmezeitraum von 5 s oder kleiner beschränkt werden. Hierdurch kann eine Wahrscheinlichkeit für eine Schädigung oder negative Beeinflussung der Lebensdauer ebenfalls in Grenzen gehalten werden.

Gemäß einer weiteren Ausführungsform wird ein Steuergerät und/oder ein Computerprogrammprodukt mit Programmcode, der auf einem maschinenlesbaren Träger gespeichert ist, zur Verfügung gestellt. Das Verfahren beinhaltet, wenn das Programm auf einem Computer oder einem Steuergerät eines Fahrzeugs ausgeführt wird, zur Verfügung stellen eines begrenzenden Belastungsmoments für einen regulären Betrieb, ermitteln von zumindest einer ersten Kenngröße für eine Plausibilität eines Ausnahmefalls, ermitteln von zumindest einer zweiten Kenngröße für eine Zulässigkeit eines Ausnahmefalls, und außer Kraft setzen des begrenzenden Belastungsmoments in Abhängigkeit der ersten Kenngröße und der zweiten Kenngröße. Hierdurch können die Verfahren gemäß Ausführungsformen der Beschreibung in Scheibenwischvorrichtungen eingesetzt werden.

Ferner richten sich Ausführungsformen auf Scheibenwischvorrichtung mit einem Steuergerät gemäß oder einem Computerprogramprodukt Ausführungsformen der Erfindung und mit einem Wischerdirektantrieb mit Motor, einem Wischarm und ein Wischblatt.

### Kurze Beschreibung der Zeichnungen

Ausführungsbeispiele der Erfindung sind in den Figuren dargestellt und werden im Folgenden näher beschrieben. Es zeigen:
Figur 1 eine schematische Darstellung eines Wischantriebs, eines Scheibenwischers, der Steuer- und Kontrollelemente sowie der für den Betrieb typischen Wischerpositionen;
Figur 2 eine schematische Darstellung eines Trajektorienverlaufs für einen Wischerarm auf einer Fahrerseite und einer Beifahrerseite, mit einer Begrenzungsfunktion und der dazu existierenden Ausnahme für einen Boost gemäß Ausführungsformen der vorliegenden Erfindung;
Figuren 3A und 3B schematische Darstellungen eines Verlaufs eines Drehmoments für einen Wischantrieb ohne Einsatz und mit Einsatz von Ausführungsformen der vorliegenden Erfindung; und
Figur 4 ein Ablaufdiagramm eines Verfahrens zum Betrieb eines Wischantriebs gemäß Ausführungsformen der vorliegenden Erfindung.

### Ausführungsformen der Erfindung

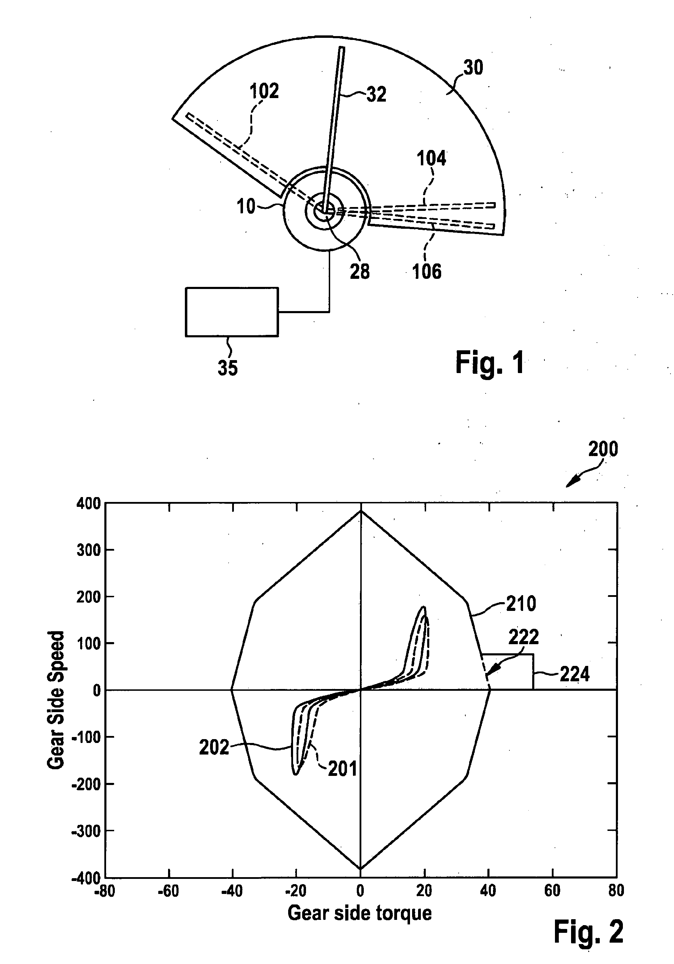

Figur 1 zeigt eine schematische Darstellung eines Aufbaus eines Wischantriebs. Ein Motor 10 führt am Lager 28 zu einer Drehbewegung des Wischhebels 32. Figur 1 zeigt den Wischhebel 32 in einer beliebigen Position auf der Scheibe 30. Durch die gestrichelten Linien wird die obere Wendelage 102, die untere Wendelage 104, und die erweiterte Parkstellung 106 dargestellt. Durch reversierende Rotation des Motors 10 wird im Normalbetrieb der Wischhebel 32 zwischen der oberen Wendelage 102 und der unteren Wendelage 104 hin- und herbewegt. Wird der Wischer während des Betriebs des Kraftfahrzeugs nicht benötigt oder nicht verwendet, das heißt wenn ein Benutzer den Wischantrieb ausschaltet, fährt der Wischhebel 32 von der unteren Wendelage 104 in die erweiterte Parkstellung 106. Typischerweise befindet sich die erweiterte Parkstellung 106 an einer sehr tiefen Position auf der Scheibe, z.B. ganz oder teilweise im Windschatten einer entsprechenden Hervorhebung einer Kühlerhaube eines Kraftfahrzeugs.

Wie in Figur 1 dargestellt wird der Motor typischerweise durch ein Steuergerät 35 gesteuert und der Motor erkennt seine Lage, z.B. eine Rotation um die Achse 28, durch einen Sensor, wie zum Beispiel einen Magnetsensor.

Das Steuergerät 35 steuert den Motor 10 derart, dass dieser einer vordefinierten Trajektorie folgt. Die Kurven 201 und 202 des Graphen 200 in Fig. 2 zeigen zwei typische Trajektorienverläufe für eine Scheinwischvorrichtung. Dabei zeigt Kurve 201 den Verlauf für die Fahrerseite und Kurve 202 den Verlauf für die Beifahrerseite. Der Trajektorienverlauf ist für einen Reversierzyklus eines Antriebsmotors für einen Wischzyklus des Wischhebels an der Scheibe dargestellt. Gezeigt wird die erforderliche Drehgeschwindigkeit und das Moment, den der Antrieb zur Verfügung stellt, um der Soll-Trajektorie zu folgen. Die roten Linien in den vier Quadranten zeigen die zur Verfügung stehende begrenzende Drehzahl und das begrenzende Drehmoment für den regulären Betrieb der Wischervorrichtung.

Liegt nun zum Beispiel ein Schneeaufbau auf der Scheibe kann die Scheibenwischvorrichtung innerhalb des begrenzenden Drehmoments blockieren. Dieser Bereich 222 des Verlaufs ist in Figur 2 gestrichelt dargestellt. Das Blockieren durch zum Beispiel einen Schneeaufbau auf der Scheibe führt dazu, dass diese von Hand freigeräumt werden muss. Dies bietet keinen guten Komfort.

Gemäß Ausführungsformen der Erfindung wird nach Plausibilisierung der Einsatznotwendigkeit für das System abweichend von der für den regulären Betrieb für ein Wischen, z.B. an nasser bzw. trockener Scheibe, für eine begrenzte Zeitdauer eine höhere Belastungsgrenze, zum Beispiel eine höhere Drehmomentgrenze, zur Verfügung gestellt. Dies ist in Figur 2 durch den Bereich 224 dargestellt Zum Beispiel kann in diesem Bereich der Motor mit einer erhöhten PWM über eine frei programmierbare Dauer angesteuert werden. Mit diesem Verfahren wird ein erhöhtes Moment an den/die Wischhebel abgegeben. Damit kann ein sich über einen längeren Zeitraum ohne Betrieb der Wischervorrichtung angesammelter Schneeaufbau auf der Scheibe aus dem Sichtbereich des Fahrers entfernt werden. Diese Funktion wird nur über einen definierten Zeitraum aktiviert und mit den zulässigen Lastkollektiven abgeglichen. Diese Funktion stellt somit u.a. eine Komfort-Funktion dar, die es ermöglichen kann, das Wegräumen eines Schneeaufbaus auf der Scheibe von Hand hin zu größeren Schneehöhen zu verschieben.

Gemäß anderen Ausführungsformen, die mit den hier beschriebenen Ausführungsformen kombiniert werden kann, kann die im Bereich 222 existierende Belastungsgrenze oder Drehmomentgrenze auch kurzfristig ganz außer Kraft gesetzt werden. Somit würde in Figur 2 der Bereich 222 nicht durch den Bereich 224 ersetzt werden, sondern entfallen.

Eine Begrenzung der Wahrscheinlichkeit für eine Beschädigung von Komponenten und/oder der Wahrscheinlichkeit einer Verringerung der Lebensdauer erfolgt u.a. durch eine Plausibilisierung des Einsatzes der Boost-Funktion, also des Ausnahmefalls. Hierzu wird eine Kenngröße für die Plausibilität des Ausnahmefalls erfasst. Gemäß einer typischen Ausführungsform kann die Kenngröße die Umgebungstemperatur, die Temperatur des Motors und/oder des Getriebes, die Erkennung des Blockierens, oder eine Kombination aus zwei oder mehr dieser Kenngrößen sein.

Zum Beispiel kann der Umgebungstemperatur eine Obergrenze für die Plausibilität eines Ausnahmefalls von -10°C bis 5°C, wie zum Beispiel 4°C, zugeordnet werden. Für Temperaturen bis zu dieser Obergrenze ist es plausibel, dass ein Schneeaufbau vorliegt. Für Temperaturen oberhalb der Obergrenze für die Umgebungstemperatur scheint eine gegebenenfalls nicht zu behebende Ausnahme vorzuliegen. Ein "Boost", der gegebenenfalls zur Beschädigung der Scheibenwischvorrichtung führen könnte wird daher oberhalb der Grenze nicht eingesetzt. Gemäß weiteren Modifikationen kann auch eine Untergrenze für die Außentemperatur zur Plausibilitätsprüfung eingeführt werden, da unterhalb von bestimmten Temperaturen ein Festfrieren auf der Scheibe auftreten kann und somit eine günstiger Einsatz der Boost-Funktion nicht gegeben ist, und die Plausibilitätsprüfung für den Ausnahmefall scheitert. Weitere Möglichkeiten für die Kenngröße für die Plausibilität eines Ausnahmefalls können auch an das Fahrzeug übertragene Wetterdaten sein.

Eine Begrenzung der Wahrscheinlichkeit für eine Beschädigung von Komponenten und/oder der Wahrscheinlichkeit einer Verringerung der Lebensdauer erfolgt weiterhin durch eine zweite Kenngröße für eine Zulässigkeit eines Ausnahmefalls. Hierdurch kann die Boost-Funktion durch ein oder mehrere Lastkollektive in ihrem Einsatz beschränkt werden.

Zum Beispiel kann die Anzahl der Boosts für den gesamten Lebenszyklus der Wischervorrichtung auf ein Maximum begrenzt werden. Typischerweise wird eine solche Begrenzung auf kritische Komponenten der Wischervorrichtung beschränkt. Zum Beispiel kann durch einen Zählvorgang ermittelt werden wie viele Boost ein Motor, ein Getriebe und/oder ein Wischerarm seit deren Inbetriebnahme bereits geleistet habe. Für eine vorbestimmte Anzahl von Boosts, die die Einsatzgrenzen des Antriebs in der jeweiligen Applikation überschreiten, wird die Boost-Funktion wird dann aus Betriebssicherheitsgründen nicht mehr zur Verfügung gestellt. In diesem Fall der Begrenzung durch den Lebenszyklus wird die fehlende Zulässigkeit dem Fahrzeugführer oder einem Fahrzeugtechniker oder Servicetechniker durch eine geeignete Maßnahme mitgeteilt, um gegebenenfalls eine Komponente tauschen zu können, so dass mit dem Tausch der entsprechenden Komponente diese Funktionalität wieder zur Verfügung gestellt werden kann.

Zusätzlich oder alternativ kann die Anzahl der Boosts für einen Schneeaufbau auf ein Maximum begrenzt werden. Zum Beispiel kann durch einen Zählvorgang ermittelt werden wie viele Boost seit der letzten positiv bewerteten Plausibilisierung bereits geleistet wurden. Für eine Anzahl von mehr als zum Beispiel 5 Boosts (je nach Applikation kann dieser Wert nach oben oder unten variieren) kann die Zulässigkeit, die Wirksamkeit und/oder die Zuverlässigkeit negiert werden. In diesem Fall der Begrenzung ist dem Fahrzeugführer mitzuteilen die Scheibe bzw. das Hindernis zu räumen bevor die Fahrt angetreten werden kann.

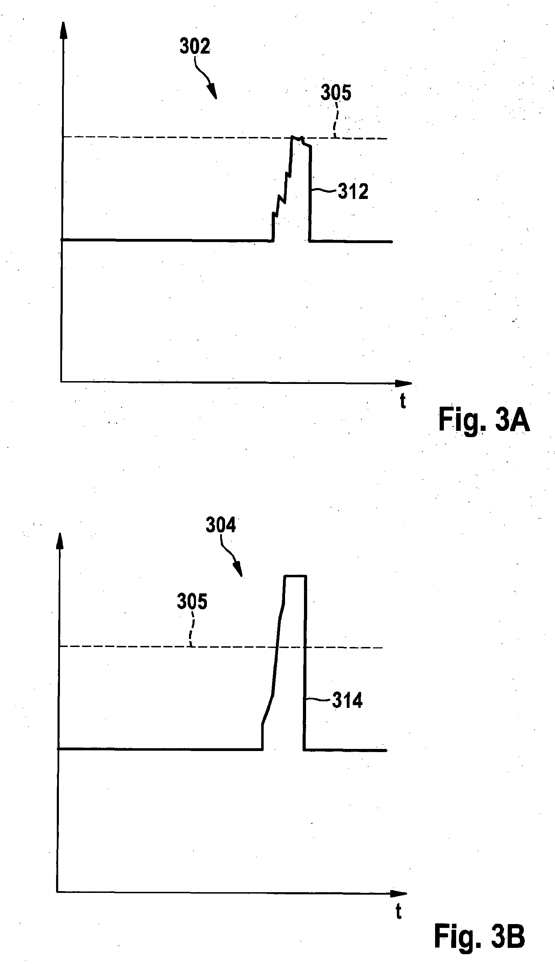

Figuren 3A und 3B zeigen den Betrieb ohne und mit Boost-Funktion gemäß Ausführungsformen der vorliegenden Erfindung. Graph 302 zeigt einen Ausschnitt einer Drehmomentkurve 312 über der Zeit für eine reguläre Funktion. Gemäß Ausführungsformen der Erfindung wird eine Belastungsgrenze 305 festgelegt, die, wie in Kurve 312 gezeigt, die Blastung bzw. das Drehmoment begrenzen. Kurve 312 übersteigt die Grenze 305 nur in dem durch den Regelungsalgorithmus bedingten Maß. Graph 304 zeigt einen Ausschnitt einer Drehmomentkurve 314 über der Zeit für einen Betrieb gemäß Ausführungsformen der Erfindung, bei der die Grenze 305 zeitweise außer Kraft gesetzt wurde und somit eine höhere Belastungsgrenze bzw. Drehmomentgrenze nach Plausibilitätsprüfung und nach Zulässigkeitsprüfung verwendet wird. Das außer Kraft setzen kann auf einen vorbestimmten Ausnahmezeitraum beschränkt sein. Zum Beispiel kann dieser Zeitraum eine Obergrenze von 5 s oder weniger sein. Abhängig von der Applikation kann diese Obergrenze auch mehr als 5 s betragen.

Für die Fälle eines vollständigen Aussetzens einer Grenze, d.h. den Fall ohne erhöhte Grenze, kann auch eine weitere Plausibilitätsprüfung und/oder Zulässigkeitsprüfung erfolgen. Es ist also gemäß manchen Ausführungsformen möglich, ein oder mehrere Ausnahmefälle zu definieren, wobei diese eine gemeinsame oder getrennte Prüfungen auf Plausibilität und Zulässigkeit haben können.

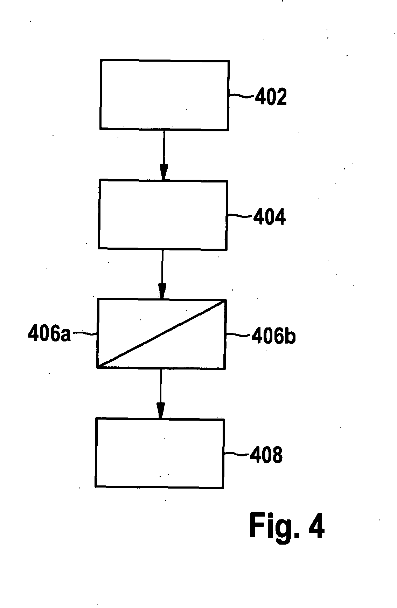

Gemäß weiteren Ausführungsformen kann in einem ersten Schritt 402, siehe Figur 4, der Antrieb bzw. der Antriebsmotor derart charakterisiert, dass die max. ertragbaren Momente ermittelt werden. Zum Beispiel kann dies z.B. als Funktion der Temperatur und als Funktion der über die erforderliche Lebensdauer ertragbaren Lastkollektive ermittelt werden. In einem Schritt 404 werden die für den regulären Betrieb zulässigen maximalen Belastungen festgelegt. Zum Beispiel kann getriebeseitig ein maximales Drehmoment von 30 Nm bis 50 Nm, z.B. ungefähr 40 Nm festgelegt werden. Dabei kann berücksichtigt werden, dass Antriebsmotoren für Scheibenwischvorrichtungen regelmäßig ein ausgeprägtes Temperaturverhalten über die Temperatur des Untersetzungsgetriebes zeigen.

Die im Weiteren beschriebene Funktion (siehe Schritt 408 unten) kommt nur dann zum Einsatz, wenn der zulässige Umgebungszustand für den Einsatz der Funktion plausibilisiert wurde und für zulässig erachtet wurde. Hierzu wird in Schritt 406a eine Plausibilitätsprüfung für einen Ausnahmefall und in Schritt 406b eine Zulässigkeitsprüfung für einen Ausnahmefall durchgeführt. Die Plausibilität kann gemäß einer Ausführungsform durch die Umgebungstemperatur und ein Vorliegen eines Betriebszustands wie z.B. Blockieren der Wischervorrichtung gegeben sein. Ferner wird über ein oder mehrere Lastkollektive eine Zulässigkeit für die Ausnahme bestimmt. Mit diesem Vorgehen kann sichergestellt werden, dass diese Funktion, nur dann zum Einsatz kommt, wenn ein tatsächlicher Bedarf vorliegt, und damit die Systemlebensdauer nicht negativ beeinflusst wird.

In Schritt 408 wird die Ansteuerung des Wischantriebs mittels des Grenzwertes für den regulären Betrieb für einen bestimmten Zeitraum verschoben bzw. außer Kraft gesetzt. Zum Beispiel kann hier ein Drehmoment von 55 Nm bis 75 Nm, z.B. 60 Nm, zugelassen werden. Weiterhin kann die zulässige Wischgeschwindigkeit in diesem Betriebszustand auf einen bedarfsgerechten Zustand verändert werden, der nicht dem regulären Wischbetrieb entspricht. Zum Beispiel keine eine Reduktion oder eine Erhöhung der Wischgeschwindigkeit je nach Applikation an einem spezifischen Fahrzeug erfolgen. Damit wird das verfügbare Moment im Rahmen des ertragbaren Momentes (siehe Schritt 402) für diesen Betriebsfall wie Figur 3B dargestellt
gesteigert. Gemäß typischen Ausführungsformen kann eine solche Steuerung bzw. ein solches Verfahren in eine Software und/oder eine Steuervorrichtung integriert werden.

Gemäß Ausführungsformen der Erfindung wird ein Blockieren von z. B. Wischerdirektantrieben im Bedarfsfall hin zu größerem Schneeaufbau verschoben. Die erforderlichen erhöhten Momente zum Beseitigen von Schneebarrieren kann nur auf den spezifizierten Bedarfsfall und auf die ertragbaren Lastkollektive beschränkt werden. Die Einsatzgrenze von bestehenden Antriebsmotoren kann hin zur Beseitigung von erhöhten Schneeaufbauten verschoben werden und/oder der Stoffeinsatz und damit das Gewicht der Scheibenwischvorrichtung kann reduziert werden, da mit einer kleineren Baugröße des Wischermotors Kundenanforderungen abgedeckt werden können, die ohne diese Funktionalität einen Antriebsmotor größerer Bauform erforderlich machen. Ferner ergibt sich die Möglichkeit zum unabhängigen Gestalten der Wischperformance z.B. im Winterbetrieb ohne Einfluss auf die Wischperformance unter anderen Betriebsbedingungen zu nehmen.

## Patentansprüche

1. Verfahren zum Betreiben eines Wischdirektantriebs mit einem Motor (10) für einen Wischervorrichtung, umfassend:
zur Verfügung stellen eines begrenzenden Belastungsmoments für einen regulären Betrieb; **gekennzeichnet durch** die folgende Verfahrensschritten:
- ermitteln von zumindest einer ersten Kenngröße für eine Plausibilität eines Ausnahmefalls;
- ermitteln von zumindest einer zweiten Kenngröße für eine Zulässigkeit eines Ausnahmefalls; und
- außer Kraft setzen des begrenzenden Belastungsmoments in Abhängigkeit der ersten Kenngröße und der zweiten Kenngröße.

2. Verfahren gemäß Anspruch 1, wobei das außer Kraft setzen weiterhin umfasst:
zur Verfügung stellen eines weiteren begrenzenden Belastungsmoments, wobei das weitere begrenzende Belastungsmoment höher ist als das begrenzende Belastungsmoment, insbesondere zumindest 30 % höher ist als das begrenzende Belastungsmoment.

3. Verfahren gemäß einem der Ansprüche 1 bis 2, wobei die erste Kenngröße zumindest eine Kenngröße umfasst, die aus der Gruppe bestehend aus: eine Umgebungstemperatur und ein Blockieren der Wischervorrichtung, gewählt ist.

4. Verfahren gemäß Anspruch 3, wobei die Kenngröße der Umgebungstemperatur eine Obergrenze für die Plausibilität eines Ausnahmefalls von -10°C bis 5°C hat.

5. Verfahren gemäß einem der Ansprüche 1 bis 4, wobei die zweite Kenngröße zumindest eine Kenngröße umfasst, die aus der Gruppe bestehend aus: eine erste Anzahl von bereits existierenden Ausnahmefällen in einem begrenzten Zeitraum und eine zweite Anzahl von bereits existierenden Ausnahmefällen im Lebenszyklus zumindest einer Komponente der Wischervorrichtung.

6. Verfahren gemäß Anspruch 5, wobei die Kenngröße der ersten Anzahl eine Obergrenze für die Zulässigkeit eines Ausnahmefalls von 5 bis 15 hat, und/oder die Kenngröße der zweiten Anzahl eine Obergrenze für die Zulässigkeit eines Ausnahmefalls von 1000 bis 60000 hat.

7. Verfahren gemäß einem der Ansprüche 5 bis 6, wobei die zumindest eine Komponente der Motor und/oder ein Getriebe der Wischervorrichtung ist.

8. Verfahren gemäß einem der Ansprüche 1 bis 5, wobei das außer Kraft setzen auf einen vorbestimmten Ausnahmezeitraum beschränkt wird, insbesondere auf einen Ausnahmezeitraum von 5 s oder kleiner beschränkt wird.

9. Computerprogrammprodukt mit Programmcode, der auf einem maschinenlesbaren Träger gespeichert ist, zur Durchführung des Verfahrens nach einem der Ansprüche 1 bis 8, wenn das Programm auf einem Computer oder einem Steuergerät eines Fahrzeugs ausgeführt wird.

10. Steuergerät (35) für einen Wischdirektantrieb, das zur Anwendung in einem Verfahren nach einem der Ansprüche 1 bis 8 programmiert ist.

11. Scheibenwischvorrichtung, umfassend:
ein Steuergerät gemäß Anspruch 10 und/oder ein Computerprogramprodukt gemäß Anspruch 9; und
ein Wischerdirektantrieb mit dem Motor, einem Wischarm und ein Wischblatt.

## Claims

1. Method for operating a direct wiper drive having a motor (10) for a wiper device, comprising:
making available a limiting load torque for normal operation; **characterized by** the following method steps:
- determining at least a first characteristic variable for the plausibility of an exceptional case;
- determining at least a second characteristic variable for the reliability of an exceptional case; and
- deactivating the limiting load torque as a function of the first characteristic variable and the second characteristic variable.

2. Method according to Claim 1, wherein the deactivation also comprises:
making available a further limiting load torque, wherein the further limiting load torque is greater than the limiting load torque, in particular is at least 30% greater than the limiting load torque.

3. Method according to one of Claims 1 to 2, wherein the first characteristic variable comprises at least one characteristic variable which is selected from the group comprising: an ambient temperature and blocking of the wiper device.

4. Method according to Claim 3, wherein the characteristic variable of the ambient temperature has an upper limit for the plausibility of an exceptional case from -10°C to 5°C.

5. Method according to one of Claims 1 to 4, wherein the second characteristic variable comprises at least one characteristic variable which is selected from the group comprising: a first number of already existing exceptional cases in a limited time period and a second number of already existing exceptional cases in the life cycle of at least one component of the wiper device.

6. Method according to Claim 5, wherein the characteristic variable of the first number has an upper limit for the reliability of an exceptional case from 5 to 15, and/or the characteristic variable of the second number has an upper limit for the reliability of an exceptional case from 1000 to 60 000.

7. Method according to one of Claims 5 to 6, wherein the at least one component is the motor and/or a transmission of the wiper device.

8. Method according to one of Claims 1 to 5, wherein the deactivation is limited to a predetermined exceptional time period, in particular is limited to an exceptional time period of 5 s or less.

9. Computer program product with program code which is stored on a machine-readable carrier, for carrying out the method according to one of Claims 1 to 8, when the program is run on a computer or a control device of a vehicle.

10. Control device (35) for a direct wiper drive which is programmed for use in a method according to one of Claims 1 to 8.

11. Windshield wiper device, comprising:
a control device according to Claim 10 and/or a computer program product according to Claim 9; and
a direct wiper drive having the motor, a wiper arm and a wiper blade.

## Revendications

1. Procédé pour faire fonctionner un entraînement direct d'essuie-glace avec un moteur (10) pour un dispositif d'essuie-glace, comprenant :
la fourniture d'un couple de sollicitation limitatif pour un fonctionnement régulier ;
**caractérisé par** les étapes de procédé suivantes :
- détermination d'au moins une première grandeur caractéristique pour une plausibilité d'un cas d'exception ;
- détermination d'au moins une deuxième grandeur caractéristique pour une admissibilité d'un cas d'exception ; et
- blocage du couple de sollicitation limitatif en fonction de la première grandeur caractéristique et de la deuxième grandeur caractéristique.

2. Procédé selon la revendication 1, dans lequel le blocage comprend en outre :
la fourniture d'un couple de sollicitation limitatif supplémentaire, le couple de sollicitation limitatif supplémentaire étant supérieur au couple de sollicitation limitatif, en particulier étant d'au moins 30 % supérieur au couple de sollicitation limitatif.

3. Procédé selon l'une quelconque des revendications 1 et 2, dans lequel la première grandeur caractéristique comprend au moins une grandeur caractéristique choisie dans le groupe suivant :
une température de l'environnement et un blocage du dispositif d'essuie-glace.

4. Procédé selon la revendication 3, dans lequel la grandeur caractéristique de la température de l'environnement présente une limite supérieure pour la plausibilité d'un cas d'exception de -10°C à 5°C.

5. Procédé selon l'une quelconque des revendications 1 à 4, dans lequel la deuxième grandeur caractéristique comprend au moins une grandeur caractéristique choisie dans le groupe suivant :
un premier nombre de cas d'exception déjà existants dans une période de temps limitée et un deuxième nombre de cas d'exception déjà existants au cours du cycle de vie d'au moins un composant du dispositif d'essuie-glace.

6. Procédé selon la revendication 5, dans lequel la grandeur caractéristique du premier nombre a une limite supérieure pour l'admissibilité d'un cas d'exception de 5 à 15, et/ou la grandeur caractéristique du deuxième nombre a une limite supérieure pour l'admissibilité d'un cas d'exception de 1000 à 60 000.

7. Procédé selon l'une quelconque des revendications 5 à 6, dans lequel l'au moins un composant est le moteur et/ou une transmission du dispositif d'essuie-glace.

8. Procédé selon l'une quelconque des revendications 1 à 5, dans lequel le blocage est limité à une période de temps d'exception prédéterminée, en particulier à une période de temps d'exception de 5 s ou moins.

9. Produit de programme informatique comprenant un code programme qui est mémorisé sur un support lisible en machine, pour mettre en oeuvre le procédé selon l'une quelconque des revendications 1 à 8, lorsque le programme est exécuté sur un ordinateur ou un appareil de commande d'un véhicule.

10. Appareil de commande (35) pour un entraînement direct d'essuie-glace qui est programmé pour être utilisé dans un procédé selon l'une quelconque des revendications 1 à 8.

11. Dispositif d'essuie-glace, comprenant :
un appareil de commande selon la revendication 10 et/ou un produit de programme informatique selon la revendication 9 ; et
un entraînement direct d'essuie-glace avec le moteur, un bras d'essuie-glace et un balai d'essuie-glace.
